Europäisches Patentamt

European Patent Office

Office européen des brevets

(11) Publication number: **0 040 178**
**B1**

# (12) EUROPEAN PATENT SPECIFICATION

(45) Date of publication of patent specification: **01.08.84**

(51) Int. Cl.³: **A 23 L 1/221**

(21) Application number: **81810180.0**

(22) Date of filing: **08.05.81**

(54) **Process for the manufacture of flavour concentrates from vegetable and/or animal substances.**

(30) Priority: **14.05.80 CH 3780/80**

(43) Date of publication of application:
**18.11.81 Bulletin 81/46**

(45) Publication of the grant of the patent:
**01.08.84 Bulletin 84/31**

(84) Designated Contracting States:
**AT BE CH DE FR GB IT LI NL SE**

(56) References cited:
**FR - A - 2 218 060**
**FR - A - 2 235 190**
**FR - A - 2 311 504**
**US - A - 3 194 662**
**US - A - 3 245 800**

(73) Proprietor: **CPC INTERNATIONAL INC.**
**International Plaza P.O. Box 8000**
**Englewood Cliffs New Jersey 07632 (US)**
(84) **BE DE FR GB IT NL SE AT**
(73) Proprietor: **Knorr Naehrmittel Aktiengesellschaft**
**Bahnhofstrasse 502**
**CH-8240 Thayngen (CH)**
(84) **CH LI**

(72) Inventor: **Heger, Reinhold**
**Baumgartenweg 7**
**CH-8240 Thayngen (CH)**
Inventor: **Müller, Günter**
**Kellergasse 32**
**D-7101 Flein (DE)**

(74) Representative: **Schmid, Rudolf et al,**
**c/o ISLER & SCHMID Patentanwaltsbureau**
**Walchestrasse 23**
**CH-8006 Zürich (CH)**

Courier Press, Leamington Spa, England.

## Description

The invention relates to a process for the manufacture of flavour-rich extracts from vegetable and animal substances. The flavour-rich extracts remain in an edible, lipophilic extracting agent, and the resulting products can be further processed as semi-finished products or can be consumed as finished products.

It is known that flavours are isolated from vegetable and animal substances by distillation of the flavour-rich constituents contained therein; see, for example, Fenaroli's Handbook of Flavor Ingredients (The Chemical Rubber Co., Cleveland 1970). For this purpose, the juice contained in the substance is usually obtained by pressing the substance. In order to distil off the flavours dissolved in the juice, the juice is vaporised in vaporisers, usually in vaporisers which work under reduced pressure. The resulting vapours are then fed to a flavour recovery unit by means of distillation apparatuses. Since the flavour components are present in these vapours only in low concentration, it is necessary either to use very high reflux ratios or to work with very large numbers of trays. The former gives rise to high costs due to the low efficiency of the process and the latter gives rise to higher investment costs. The disadvantages of this process are the poor extraction, during the juice-producing stage, of the flavour components contained in the substance, an adverse change in sensitive flavour components during the juice-producing stage, a poor flavour yield on vaporisation of the juice and damage to the flavours due to the high temperatures which are used during the distillation. Furthermore, it is known that highly concentrated flavours, such as are obtained as the top product from the distillation, are highly reactive and thus decompose very easily.

It is true that all of the disadvantages mentioned can be substantially eliminated with the aid of additional processing steps, but the effect of these is to make the process considerably more complex and more expensive.

Further disadvantages can be the physico-chemical properties of flavours, such as the formation of azeotropes and the boiling curves of water and aroma constituents having a similar shape. These properties make it necessary to add further substances to the vapours for distillation (see, for example, German Auslegeschrift 2,327,477 and U.S. Patent Specification 3,819,737). Such substances are frequently not regarded as wholly acceptable from the health point of view, and since complete separation of these added substances from the flavour is not possible, the flavours obtained using these substances are regarded very sceptically by some specialists. In some countries it is not permissible to use such flavours in foodstuffs at all.

Furthermore, it is known that flavours can also be obtained by direct extraction from pre-comminuted raw materials or, as in the first process, from the condensed vapours obtained from the vaporiser (see Austrian Patent Specification 276,041 and German Offenlegungsschrift 2,429,509). For this purpose, solvents which have an absolute solvent power for the flavours to be extracted which is very much higher than that of water are added to the product to be treated. Usually, these solvents have a miscibility gap with water and this is utilised to separate the aqueous phase, which has a low flavour content, and the flavour-rich solvent phase from one another after extraction has taken place. Since the solvents used for this purpose are likewise usually regarded as not being wholly acceptable from the health point of view, the solvent phase is in general separated by distillation into pure flavour mixture and pure solvent. Even this separation does not result in absolutely solvent-free flavours, and for this reason the reservations here are the same as in the case of the isolation of flavours by the pure distillation method.

The object of the present invention was to overcome the disadvantages of the previous processes in a simple manner and to provide a flavour concentrate consisting only of physiologically acceptable components, which can be used as a semi-finished product in the foodstuffs industry or can be marketed as a finished product for the consumer.

The process, according to the invention, for the manufacture of flavour concentrates from vegetable and/or animal substances by extraction with fats or fat-like solvents in the presence of water, is characterised in that the material for extraction is subjected to a heat treatment with the extracting agents in a closed pressure vessel, with the proviso that the amount of water is such that the water activity corresponds to a $a_w$ value of not less than 0.5.

It is extremely important that the water activity ($a_w$ value) be adhered to precisely.

The animal or vegetable material for extraction, which is to be treated, is filled into a pressure vessel, for example an autoclave, together with an extracting agent, which in general takes up only a small amount of water. Examples of suitable extracting agents are physiologically acceptable oils and fats of all types, such as edible fatty acid glycerides, edible paraffins and the like.

Depending on the desired flavour concentration, the weight ratio of extracting agent to animal or vegetable material for extraction is in general 1:2 to 30:1, based on the solids content of the raw material.

For the extraction of chicken, this weight ratio is, for example, 1:2 to 4:1. In the case of a material for extraction which in itself has a strong flavour, such as herbs and spices, this ratio can be 10:1 to 100:1.

The following substances are suitable, in particular, as material for extraction: spices, herbs, seeds, fungi, nuts, fruit and vegetables and also fat, meat, bones, offal and skin from beef cattle, pigs, sheep, lambs, chickens, turkeys and other animals which customarily are used for human consumption. Fat and meat can be used in the raw state or after any pretreatment which may have been carried out, for example in the salted, smoked or pickled state or the like. Seafood, such as mussels, crabs, fish and the like, is also suitable.

An essential characteristic of the invention is that the water content of the material for extraction is adjusted within narrow limits from the start or is influenced by the measures which are described below, in such a way that the amount of water during the extraction treatment corresponds to a water activity with a $a_w$ value of not less than 0.5.

Water activity, expressed by the $a_w$ value, is understood as meaning the ratio of the vapour pressure of the water contained in a solid to the vapour pressure of free water at the same temperature (see, for example, M. Loucin: Die Grundlagen der Verfahrenstechnik in der Lebensmittelforschung (Basic Principles of Process Technology in Foodstuffs Research), Verlag Sauerländer, Aarau und Frankfurt/Main, 1969, pages 601 et seq; the method of determination for the $a_w$ value or the "relative moisture content of the material", which is identical thereto, is also described in this publication).

For measuring the water activity in the excess pressure range, it is advantageous to use an adiabatically isothermal autoclave. The measurement is carried out, for example, by warming the contents of the autoclave, which are free from air, to the measurement temperature, waiting until the isothermal adiabatic state has been reached and then carrying out a pressure measurement in the vapour space and a temperature measurement in the liquid phase or vapour phase.

With the aid of a vapour table for water vapour, the saturation vapour pressure at the temperature of the liquid phase can then be determined and the value for the water activity is obtained using the equation

$$a_w = \frac{P_v}{P_s}$$

where

$P_v$=pressure in the vapour space
$P_s$=saturation pressure.

Surprisingly, it was found that the result of the extraction is very highly dependent on the $a_w$ value and can be substantially influenced by precise adjustment and control of this value. Thus, for example, in the case of the extraction of chicken, the concentrate has a distinct flavour of roast chicken if the $a_w$ value is not more than 0.8, preferably not more than 0.7 and in particular not more than 0.6, whilst an identical chicken under the same temperature and pressure conditions but at a $a_w$ value of not less than 0.9 and preferably not less than 0.95 develops the typical flavour of boiled chicken.

Depending on its natural constitution, the material for extraction can be pre-comminuted to a certain degree. However, it is essential that this pre-comminution is not carried too far. The comminuted pieces should in general have a thickness of not less than 3 mm, unless, as for example in the case of herbs, the material for extraction is leaves which in themselves have a lesser thickness. The other geometrical dimensions, such as length and width of the small flakes formed in this way, are not important for the invention.

Comminution of the material for extraction is preferably carried out when the material is already in the extracting agent, in order to prevent flavour losses. In order to facilitate material exchange during the subsequent extraction, the material for extraction can also be deep-frozen prior to extraction. Other methods of preparation, such as marinating and the like, are also possible.

Depending on whether reactions for the development of specific flavour notes are desired in the subsequent extraction, which reactions may or may not require oxygen, the top space of the autoclave is simply left under air or is filled with pure oxygen or, in another case, the air is replaced by nitrogen, or a vacuum is applied to the top space. The vapour space can also be freed from oxygen by an injection of steam.

The autoclave is then heated. For a boiled flavour, heating can be direct or indirect; for a roast flavour, heating is generally indirect. On start-up, the combination of pressure and direct steam heating can prevent local overheating.

The heating rate, the maximum temperature reached, the holding time at this temperature and the subsequent cooling are different for each material and each purpose and can be determined by means of simple tests by those skilled in the art.

The temperatures are in general between 100°C and the temperature which is tolerated without impairment by the substances used and in general is not above 250°C; preferably the temperature is 100°C to 180°C and in particular 120°C to 160°C.

A continuous imbalance can be set up by means of known process measures, such as the installation of a condenser in the vapour space in the autoclave, or by a stirrer or by recirculating by pumping or the like. The effect of this is that vaporised water and also vaporised flavour constituents are recycled into the liquid phase and are again subjected to material exchange with the extracting agent.

The rate of flavour transfer by the use of the process described is astonishingly high. In general, virtually complete transfer of the flavour to the extracting agent is achieved within a maximum of 90 minutes, as can be seen from the examples which follow. The process time is usually shorter.

As already mentioned, the water content of the material for extraction plays a significant role. Firstly, the taste of many foodstuffs changes on drying. An example of such foodstuffs is fungi, which on drying develop a considerably more typical flavour of the fungus than do the fresh fungi. Furthermore, by controlling the water content, the extraction can be combined with a change in the flavour towards that of the boiled product or that of the roast product. Specifically, it is known that on subjection to heat, substances which contain water, carbohydrates and proteins at the same time undergo a so-called Maillard reaction, i.e. a known reaction of sugars with amines. The known browning of foodstuffs on deep frying is due to this reaction. Because of the high temperature at which the product is deep fried, a very large amount of water evaporates at the surface of the product which is being deep fried, so that the water activity falls at this point and surface browning takes place.

One advantage of this invention is to control this browning step by means of suitable measures. For this purpose, the treatment of the material for extraction is not carried out in an open vessel but in a pressure vessel.

Deep-frying of poultry in pressure vessels has already been patented in several variants. Examples of these are: U.S. Patent Specification 3,194,662 and U.S. Patent Specification 3,245,800. However, the aim of the present invention is not, as described in these patents, to shorten the time for deep frying, but to ensure, during the process, that the material for extraction attains very specific, preselected water activities. Specifically, it is possible by this means to achieve Maillard reactions or to prevent these reactions by prior adjustment of the water content of the material in the case of all substances which meet the said conditions in respect of their composition. Of course, further parameters which have an effect on the water activity of the material should be taken into account. These parameters are: the water activity of the material as a function of pressure and temperature, the water activity of the extracting agent under pressure and at elevated temperature, the filling ratio of the autoclave, the material for extraction: extracting agent ratio and changes in volume due to thermal expansion and elastic deformation under pressure and at elevated temperature. If the water activity cannot be influenced to a sufficient extent with the aid of the said parameters, it is possible gradually to dehydrate the material under mild conditions, if the water activity is too high, or to add the requisite amount of water to the autoclave if the water activity is too low.

Surprisingly, complete transfer of the flavour to the extracting agent is achieved with the process according to the invention. The material which has been subjected to the extraction process is generally completely without taste. If this material is to be further utilized, the process can be controlled in such a way that a certain degree of flavour remains in the material.

The process is illustrated with the aid of several examples below. Unless indicated otherwise, the material is separated, after the treatment in the autoclave, by means of multi-stage centrifuging into the solid phase (partially dehydrated material), water and the extracting agent, which now contains the flavour. The extracting agent containing the flavour can be used as a flavouring substance in the manufacture of soups, sauces or other foodstuffs suitable for this purpose, can be sold direct as a seasoning or can be marketed in the form of a mixture with salt, glutamate and the like, as a seasoning in powder form.

Excellent protection of the extracting agent containing the flavour against perishing by oxidation can be achieved by the combination of the material for extraction with herbs having an antioxidant action (see P. A. Dewdney: Natural Fat-Soluble Antioxidants, Leatherhead Survey No. 96, 1977). The product is then stable for two years or more if light is excluded.

Comparison experiment

70 g of commercially available bay leaves (water content 6.8%) are filled with 3.3 kg of peanut oil and 3.3 kg of hardened peanut fat into the autoclave. The fats and the autoclave are heated beforehand to 60°C. The autoclave is then closed and heated indirectly until the temperature of the fat reaches 120°C. The pressure rises to an excess pressure of 0.20 bar. After 40 minutes at 120°C, the autoclave is cooled again.

Examination shows:

Fat:          slight odour of bay leaves
Bay leaves:   virtually unchanged compared with the start.
$a_w = 0.051$.

Example 1

70 g of commercially available bay leaves (water content 6.8%) are soaked in 630 g of water for 16 hours. The soaked bay leaves together with the steep water are then introduced into the autoclave together with the same amount of fat as in the comparison example. The mixture is treated in the manner previously described. The pressure now rises to an excess pressure of 1.0 bar.

4

Examination shows:

Fat: intense taste of bay leaves, about ten times stronger than that in the comparison example

Bay leaves: no longer taste of bay leaves.

$a_w=0.99$.

Example 2

4 kg of raw chicken meat which has been boned by hand (water content 60%, fat content 20%) are filled with 4 kg of beef fat at 65°C into the autoclave. The chicken meat had previously been passed through a passing machine. 50 g of water are also added to the autoclave. The autoclave is then closed and heated until the contents boil. The 50 g of water previously added are condensed out from the autoclave again via a cold trap, in order to ensure that the top space contains no further air. The autoclave is then completely closed and the contents are warmed to 120°C. The pressure rises to an excess pressure of 1.0 bar. After 60 minutes the autoclave is cooled again.

Examination of the meat, the fat and the aqueous phase shows:

$a_w=0.99$.

| | Taste | Odour | Appearance |
|---|---|---|---|
| Meat | typical of boiled chicken | typical of boiled chicken | like boiled chicken |
| Oil | strong taste of boiled chicken | strong odour of boiled chicken | like the fat from boiled chicken but somewhat paler |
| Broth | unpleasant, not of chicken | unpleasant, not of chicken | brownish |

**Claims**

1. Process for the manufacture of flavour concentrates from vegetable and/or animal substances by extraction with fats or fat-like solvents in the presence of water, characterised in that the material for extraction is subjected to a heat treatment with the extracting agents in a closed pressure vessel, with the proviso that the amount of water is such that the water activity, $a_w$, (also known as "relative moisture content of the material" and defined as the ratio of the vapour pressure of the water contained in a solid to the vapour pressure of free water at the same temperature) corresponds to $a_w$ value of not less than 0.5.

2. Process according to Claim 1, characterised in that the material for extraction is comminuted into pieces, the average thickness of which is about 3 mm, and/or is deep-frozen.

3. Process according to Claim 2, characterised in that the comminution of the material for extraction is carried out in the extracting agent.

4. Process according to one or more of the preceding Claims, characterised in that the extracting agents are fatty acid glycerides or paraffin oils and paraffin waxes.

5. Process according to one or more of the preceding Claims, characterised in that the material for extraction is an animal product, for example from cattle, pigs, sheep or poultry, or a vegetable product, for example fungi, vegetables, herbs or spices.

6. Process according to one or more of the preceding Claims, characterised in that the weight ratio of extracting agent: material for extraction is 1:2 to 30:1, based on the solids content of the material for extraction.

7. Process according to Claim 6, characterised in that the material for extraction is chicken and the weight ratio of extracting agent: material for extraction is 1:2 to 4:1.

8. Process according to one or more of Claims 1—5, characterised in that the material for extraction is herbs or spices and the weight ratio of extracting agent: material for extraction is 10:1 to 100:1 and in particular 10:1 to 30:1.

9. Process according to one or more of the preceding Claims, for the manufacture of flavour concentrates which give the taste produced by roasting, braising, grilling or frying, characterised in that the water content is so adjusted that, during the process, the water activity corresponds to an $a_w$ value of not more than 0.8, preferably not more than 0.7 and in particular not more than 0.6.

10. Process according to one or more of the preceding Claims, for the manufacture of flavour concentrates which have the flavour of the boiled product, characterised in that the water content of the raw material is so adjusted by prior conditioning that, during the process, the water activity corresponds to an $a_w$ value of not less than 0.9 and preferably not less than 0.95, water being added to the pressure vessel if necessary.

11. Use of the flavour concentrate according to Claims 1—10 as a semi-finished product for the manufacture of foodstuffs.

**Patentansprüche**

1. Verfahren zur Herstellung von Aromakonzentraten aus pflanzlichen und/oder tierischen Stoffen durch Extraktion mit Fetten oder fettähnlichen Lösungsmitteln in Gegenwart von Wasser, dadurch gekennzeichnet, dass das Extraktionsgut mit dem Extraktionsmittel in einem geschlossenen Druckbehälter einer Temperaturbehandlung unterzogen wird mit der Ausnahme, dass die Wassermenge so bemessen wird, dass die Wasseraktivität $a_w$ (auch bekannt als "relativer Feuchtigkeitsgehalt des Materials" und definiert als das Verhältnis des Dampfdruckes des in einem Feststoff enthaltenen Wassers zum Dampfdruck von freiem Wasser bei derselben Temperatur) einem $a_w$-Wert von mindestens 0,5 entspricht.

2. Verfahren nach Anspruch 1, dadurch gekennzeichnet, dass das Extraktionsgut in Stücke, deren mittlere Dicke etwa 3 mm beträgt, zerkleinert und/oder tiefgefroren wird.

3. Verfahren nach Anspruch 2, dadurch gekennzeichnet, dass die Zerkleinerung des Extraktionsgutes im Extraktionsmittel vorgenommen wird.

4. Verfahren nach einem oder mehreren der vorstehenden Ansprüche, dadurch gekennzeichnet, dass die Extraktionsmittel Fettsäureglyceride oder Paraffinöle und Paraffinwachse sind.

5. Verfahren nach einem oder mehreren der vorstehenden Ansprüche, dadurch gekennzeichnet, dass das Extraktionsgut ein tierisches Produkt, z.B. vom Rind, Schwein, Schaf und Geflügel, oder ein pflanzliches Produkt, z.B. Pilze, Gemüse, Kräuter oder Gewürze ist.

6. Verfahren nach einem oder mehreren der vorstehenden Ansprüche, dadurch gekennzeichnet, dass das Gewichtsverhältnis Extraktionsmittel: Extraktionsgut 1:2 bis 30:1 beträgt, bezogen auf den Trockensubstanzgehalt des Extraktionsgutes.

7. Verfahren nach Anspruch 6, dadurch gekennzeichnet, dass das Extraktionsgut Huhn ist und das Gewichtsverhältnis Extraktionsmittel: Extraktionsgut 1:2 bis 4:1 beträgt.

8. Verfahren nach einem oder mehreren der Ansprüche 1 bis 5, dadurch gekennzeichnet, dass das Extraktionsgut Kräuter oder Gewürze sind, und das Gewichtsverhältnis Extraktionsmittel: Extraktionsgut 10:1 bis 100:1, insbesondere 10:1 bis 30:1, beträgt.

9. Verfahren nach einem oder mehreren der vorstehenden Ansprüche zur Herstellung von Aromakonzentraten, welche den beim Rösten oder Braten erzeugten Geschmack ergeben, dadurch gekennzeichnet, dass der Wassergehalt so eingestellt wird, dass während des Prozesses die Wasseraktivität einem $a_w$-Wert von höchstens 0,8 und vorzugsweise höchstens 0,7 und insbesondere höchstens 0,6 entspricht.

10. Verfahren nach einem oder mehreren der vorstehenden Ansprüche zur Herstellung von Aromakonzentraten, welche das Aroma des gekochten Produktes aufweisen, dadurch gekennzeichnet, dass der Wassergehalt des Rohstoffes durch vorheriges Konditionieren so eingestellt wird, dass während des Prozesses die Wasseraktivität einem $a_w$-Wert von mindestens 0,9 und vorzugsweise mindestens 0,95 entspricht, gegebenenfalls unter Zusatz von Wasser in den Druckbehälter.

11. Verwendung des Aromakonzentrates nach den Ansprüchen 1 bis 10 als Halbfabrikat zur Herstellung von Lebensmitteln.

**Revendications**

1. Procédé de préparation de concentrés aromatisants à partir de substances végétales et/ou animales par une extraction avec des graisses ou des solvants analogues à des graisses en présence d'eau, caractérisé en ce que la matière pour l'extraction est soumise à un traitement thermique avec les agents d'extraction dans un récipient clos sous pression, à condition que la quantité d'eau soit telle que l'activité de l'eau $a_w$ (également connue comme étant "la teneur en humidité relative de la matière" et définie comme étant le rapport de la pression de vapeur de l'eau contenue dans un solide à la pression de vapeur de l'eau libre à la même température) correspond à une valeur $a_w$ non inférieure à 0,5.

2. Procédé selon la revendication 1, caractérisé en ce que la matière pour l'extraction est hachée en morceaux dont l'épaisseur moyenne est d'environ 3 mm et/ou est surgelée.

3. Procédé selon la revendication 2, caractérisé en ce que le hachage de la matière pour l'extraction est effectué dans l'agent d'extraction.

4. Procédé selon l'une ou plusieurs des revendications précédentes, caractérisé en ce que les agents d'extraction sont des glycérides d'acides gras ou des huiles paraffiniques et des cires paraffiniques.

5. Procédé selon l'une ou plusieurs des revendications précédentes, caractérisé en ce que la matière pour l'extraction est un produit animal, par exemple provenant du bétail, de porcs, de moutons ou de volailles, ou un produit végétal, par exemple des champignons, des légumes, des herbes ou des épices.

6. Procédé selon l'une ou plusieurs des revendications précédentes, caractérisé en ce que le rapport, en poids, agent d'extraction: matière pour l'extraction est de 1:2 à 30:1, sur la base de la teneur en solides de la matière pour l'extraction.

7. Procédé selon la revendication 6, caractérisé en ce que la matière pour l'extraction est du poulet et le rapport, en poids, agent d'extraction: matière pour l'extraction est de 1:2 à 4:1.

8. Procédé selon l'une ou plusieurs des revendications 1—5, caractérisé en ce que la matière pour l'extraction est constituée d'herbes ou d'épices et le rapport, en poids, agent d'extraction: matière pour l'extraction est de 10:1 à 100:1, et en particulier de 10:1 à 30:1.

9. Procédé selon l'une ou plusieurs des revendications précédentes, pour la préparation de concentrés aromatisants donnant le goût produit par rôtissage, braisage, grillage ou friture, caractérisé en ce que la teneur en eau est réglée de manière que, pendant le procédé, l'activité de l'eau corresponde à une valeur $a_w$ ne dépassant pas 0,8, de préférence ne dépassant pas 0,7, et en particulier ne dépassant pas 0,6.

10. Procédé selon l'une ou plusieurs des revendications précédentes, pour la préparation de concentrés aromatisants qui possèdent l'arôme du produit bouilli, caractérisé en ce que la teneur en eau de la matière crue est réglée, par conditionnement préalable, de manière que, pendant le procédé, l'activité de l'eau corresponde à une valeur $a_w$ non inférieure à 0,9 et de préférence non inférieure à 0,95, de l'eau étant ajoutée au récipient sous pression si cela est nécessaire.

11. Utilisation du concentré aromatisant selon les revendications 1 à 10 comme produit semi-fini pour la préparation d'aliments.